Europäisches Patentamt

European Patent Office

Office européen des brevets

(19)

(11) Veröffentlichungsnummer : **0 438 612 B1**

(12) # EUROPÄISCHE PATENTSCHRIFT

(45) Veröffentlichungstag der Patentschrift :
**13.01.93 Patentblatt 93/02**

(51) Int. Cl.⁵ : **B23K 26/00, B23K 37/04**

(21) Anmeldenummer : **90101178.3**

(22) Anmeldetag : **22.01.90**

(54) **Steuerung zum stumpfen oder überlapptem Verschweissen von Blechen oder Bändern, im kontinuierlichen Durchlaufverfahren und Einrichtung zum Durchführen dieses Verfahrens.**

(43) Veröffentlichungstag der Anmeldung :
**31.07.91 Patentblatt 91/31**

(45) Bekanntmachung des Hinweises auf die
Patenterteilung :
**13.01.93 Patentblatt 93/02**

(84) Benannte Vertragsstaaten :
**AT BE CH DE DK ES FR GB GR IT LI LU NL SE**

(56) Entgegenhaltungen :
**EP-A- 0 234 346**
**DE-A- 3 626 974**
**PATENT ABSTRACTS OF JAPAN vol. 9, no. 261 (M-422)(1984) 18 Oktober 1985, & JP-A-60 108189 (TOYOTA JIDOSHA K.K.) 13 Juni1985,**

(73) Patentinhaber : **THYSSEN INDUSTRIE AG MASCHINENBAU**
**Stockumer Strasse 28, Postfach 63 20**
**W-5810 Witten 6 (Annen) (DE)**

(72) Erfinder : **Schneider, Rolf**
**Karl Erb Ring 207**
**W-7980 Ravensburg (DE)**

(74) Vertreter : **Beyer, Rudi**
**Patentanwalt Dipl.-Ing. Rudi Beyer Am Dickelsbach 8**
**W-4030 Ratingen 6 (Hösel) (DE)**

EP 0 438 612 B1

## Beschreibung

Die Erfindung betrifft ein Verfahren zum stumpfen oder überlapptem Verschweißen von Blechen oder Bändern, im kontinuierlichen Durchlaufverfahren, wobei die Bleche oder Bänder seitlich nebeneinander mit jeweils einer ihrer Seitenkanten an in derselben Vertikalebene liegenden Führungsflächen liegend, auf in spitzem Winkel zueinander geneigt liegenden Förderebenen zum fugenlosen oder überlapptem Anliegen bzw. Aufliegen in derselben Horizontalebene gebracht und anschließend durch ein Laserstrahlschweißverfahren miteinander verschweißt werden.

Des weiteren betrifft die Erfindung eine Einrichtung zum Durchführen des erfindungsgemäßen Verfahrens, bei welcher die stumpf oder überlappt miteinander zu verschweißenden Bleche oder Bänder herangefördert werden, und die Ebenen der Förderer in spitzem Winkel zueinander liegende Förderebenen bilden, auf denen die Bleche oder Bänder ruhen, wobei zwischen den Förderebenen orthogonal - vertikal - zu diesen verlaufend wenigstens ein leistenförmiger Anschlag (Lineal) angeordnet ist, gegen den die Bleche mit ihren miteinander zu verschweißenden Kanten flächig entlangrutschen, und der leistenförmige Anschlag od. dgl. bis kurz vor der Laserstrahlschweißvorrichtung reicht, mit Mitteln zur Längenzentrierung der Bleche oder Bänder.

Zum Längsnahtschweißen von Blechen oder Bändern müssen die zu verschweißenden Bleche bzw. Bänder so geführt werden, daß deren Kanten fugenlos aneinanderliegen, um problemlos verschweißt werden zu können. Zum Verschweißen von Blechen ist es bekannt, die Bleche aneinanderzulegen, einzuspannen und beim Schweißen eine Schweißeinrichtung längs der zu verschweißenden Kanten zu bewegen. Bei biegsamen Blechen ist es dabei schwierig, die zu verschweißenden Kanten fugenlos aneinanderzulegen und in dieser Lage einzuspannen. Dabei tritt auch der Nachteil auf, daß die Bleche ungewollt überlappen. Ein kontinuierlicher Betrieb ist unabhängig von der Blechdicke nicht möglich. Ein weiterer Nachteil der bekannten Verfahrensweise liegt darin, daß sowohl die Bleche oder Bänder als auch die Schweißeinrichtung bewegt werden müssen. Ein kontinuierlicher Transport der Bleche oder Bänder durch die Schweißanlage ist nicht möglich. Die Schweißeinrichtung kann dabei ebenfalls nicht kontinuierlich arbeiten, und die Länge der Schweißnaht ist durch den Verfahrweg der Schweißeinrichtung begrenzt.

Insbesondere bei Schweißeinrichtungen mit ortsfestem Schweißkopf, an dem die zu verschweißenden Stoßkanten fugenlos aneinanderliegend vorbeigeführt werden müssen, sind die bekannten Verfahren und Vorrichtungen nicht anwendbar.

Die Anmelderin ist auch Mitinhaberin der europäischen Patentanmeldung EP-A-234 346, die ein Verfahren und eine Einrichtung der eingangs genannten Art beschreibt. Sie zeigt ein Verfahren zum Führen von auf Stoß zu verschweißenden Blechen oder Bändern betrifft, bei welchem die Bleche oder Bänder seitlich nebeneinander mit jeweils einer ihrer Seitenkanten an in derselben Vertikalebene liegenden Führungsflächen liegend, auf in spitzem Winkel zueinander geneigt liegenden Förderebenen zum fugenlosen Anliegen in dieselbe Horizontalebene gebracht werden.

Diese auf die Anmelderin zurückgehende Patentanmeldung betrifft außerdem eine Vorrichtung mit Mitteln zum Fördern und Führen von auf Stoß zu verschweißenden Blechen oder Bändern, bei welcher die Fördermittel, insbesondere Rollengänge, in spitzem Winkel zueinander liegende Förderebenen bilden, wobei die Fördermittel aus in derselben Vertikalebene liegenden Führungsflächen bestehen.

Diese Vorrichtung weist seitliche Führungsmittel für die Bleche oder Bänder auf, wobei die seitlichen Führungsmittel Lineale oder Rollen sein können. Die seitlichen Führungsmittel können in Richtung auf die Mittelachse der Vorrichtung schräg gestellte Förderrollen darstellen. Hinter der Führung in Laufrichtung der Bänder oder Bleche und über und unter den Bändern oder Blechen sind Klemmrollen angeordnet.

Nach diesem bekannten Verfahren liegen die zu verschweißenden Kanten von Blechen oder Bändern fugenlos aneinander. Die Bleche bzw. Bänder können nicht mehr überlappen. Das Verfahren eignet sich sowohl zum kontinuierlichen als auch zum intermittierendem Schweißbetrieb. Durch das exakte Aneinanderliegen der zu verschweißenden Kanten wird die Fehlerquote beim Schweißen erheblich herabgesetzt.

Bei dieser Patentanmeldung müssen die Bleche oder Bänder mechanisch längenzentriert werden, was durch einen von unten kommenden mechanischen Anschlag geschieht, der jeweils gegen die in Durchlaufrichtung der vorderen Stirnkante der Bleche oder Bänder einwirkt. Dieser Anschlag zur mechanischen Blech-Längenzentrierung kann durch eine abwechselnd beiseitig durch Druckmitteldruck, insbesondere hydraulisch, pneumatisch angetriebene Kolben-Zylinder-Einheit hochgeschwenkt und wieder abgesenkt werden. Außerdem ist eine Beschädigung der Anschlagkante möglich.

Der Erfindung liegt die Aufgabe zugrunde, ein Verfahren zum kontinuierlichen Verschweißen von Blechen oder Bändern an den aneinander angrenzenden Kanten - auf Stoß - zu schaffen, bei welchen eine mechanische Längenzentrierung der Bleche oder Bänder nicht mehr erforderlich ist.

Des weiteren liegt der Erfindung die Aufgabe zugrunde, eine vorteilhafte Einrichtung zum Durchführen des erfindungsgemäßen Verfahrens zu schaffen.

## Lösung der Aufgabe hinsichtlich der Steuerung

Diese Aufgabe wird durch die in **Patentanspruch 1** wiedergegebenen Merkmale gelöst.

Bei der erfindungsgemäßen Steuerung werden die miteinander zu verschweißenden Bleche oder Bänder auf den beiden Förderbahnen herangeführt, wobei zunächst Längentoleranzen entstehen. Die Bleche werden nach dem Auflegen mittels schräg stehender, angetriebener Rollen weiter in Förderrichtung transportiert und dabei automatisch gleichzeitig gegen die Lineale gedrückt und parallel zueinander ausgerichtet.

Die beiden Seiten für die Bleche oder Bänder besitzen getrennt funktionierende Motoren, Sensoren und Inkrementalgeber. Sobald ein Blech beim Transport in Pfeilrichtung den jeweiligen Sensor erreicht hat, gibt dieser ein Signal an den Inkrementalgeber. Dieser arbeitet nun eine vorgegebene Anzahl Inkremente ab und gibt dem Motor vor, in einer definierten Position anzuhalten. Somit stehen die beiden zuvor durch Anschlag an das Lineal parallel zueinander ausgerichteten Bleche nach einem gewissen Transportweg mit der korrigierten Längentoleranz auch für die weitere Arbeitsfolge bereit.

Die Bleche werden mit ausgeglichener Längentoleranz synchron durch den stehenden Laserfocus transportiert und lasergeschweißt.

Eine erfindungsgemäße Steuerung eignet sich insbesondere zum Verschweißen von Blechen oder Bändern für den Karosseriebau für die Kfz-Industrie, obwohl die Erfindung darauf nicht beschränkt ist.

Nach der erfindungsgemäßen Steuerung lassen sich Bleche oder Bänder mit hoher Genauigkeit ohne Einsatz mechanischer Mittel längenzentrieren und verschweißen.

## Lösung der Aufgabe betreffend die Einrichtung

Diese Aufgabe wird durch die **Patentanspruch 2** wiedergegebenen Merkmale gelöst.

Eine erfindungsgemäße Einrichtung läßt sich mit besonderem Vorteil zum Laserverschweißen von Blechen im Karosseriebau für die Kfz-Industrie verwenden. Die Mittel für die Parallelausrichtung der miteinander zu verschweißenden Bleche oder Bänder zueinander, aber auch die Mittel zur Längenzentrierung dieser Bleche oder Bänder sind relativ einfach aufgebaut und ermöglichen bei hoher Arbeitsleistung die zum Beispiel für den Karosseriebau angestrebte hohe Schweißnahtgüte, bei exakt miteinander verschweißten Blechen oder Bändern.

Der Synchronlauf von Motoren für die verschiedenen Bahnen auf denen die miteinander zu verschweißenden Bleche oder Bänder herangefördert werden, kann entweder gemäß Patentanspruch 2 durch eine mechanische Kupplung zwischen diesen Motoren erreicht werden, wobei die Kupplung nach der erfolgten Längenzentrierung zugeschaltet wird. Oder es wird eine elektrische Welle, das heißt durch elektrische Steuerung der Motoren 1 und 2 des Synchronlaufs derselben herbeigeführt. Hierbei wird durch geeignete, käuflich zu erwerbende Steuerungskomponenten der Gleichlauf überwacht.

In der Zeichnung ist die Erfindung - teils schematisch - an Ausführungsbeispielen veranschaulicht. Es zeigen:

Fig. 1 eine Draufsicht zweier längsnahtgeschweißter Bleche oder Bänder;

Fig. 2 eine teilweise Draufsicht auf eine Vorrichtung gemäß der Erfindung im Bereich der Laserstrahlschweißvorrichtung;

Fig. 3 eine Seitenansicht zu Fig. 2 in Richtung des Pfeiles A in Figur 2;

Fig. 4 einen Schnitt nach der Linie IV - IV der Figur 3;

Fig. 5 einen Schnitt nach der Linie V - V der Figur 3;

Fig. 6 einen senkrechten Schnitt durch eine Einrichtung gemäß der Erfindung im Bereich der Laserstrahlschweißvorrichtung;

Fig. 7 einen Schnitt nach der Linie VII - VII der Figur 6;

Fig. 8 einen Schnitt nach der Linie VIII - VIII der Figur 6;

Fig. 9 einen Schnitt nach der Linie IX - IX der Figur 6;

Fig. 10 eine teilweise Draufsicht auf eine Vorrichtung;

Fig. 11 eine ausschnittsweise Vergrößerung im Bereich der Laserstrahlschweißvorrichtung;

Fig. 12 eine teilweise Stirnansicht in Richtung des Pfeiles B der Figur 11;

Fig. 13 eine perspektivische Darstellung der Lineale;

Fig. 14 eine teilweise Stirnansicht einer Einrichtung gemäß der Erfindung;

Fig. 15 das anfängliche Transportieren zweier miteinander durch Laserstrahlschweißen miteinander zu verschweißenden Bleche auf einer Einrichtung gemäß der Erfindung;

Fig. 16 eine Einrichtung gemäß der Erfindung; wobei die Bleche durch die erfindungsgemäße Steuerung bereits längenzentriert sind und

Fig. 17 eine Draufsicht auf eine Einrichtung gemäß der Erfindung, wobei eine lasergeschweißte Blechplatine abtransportiert und neue Bleche zur Laserstrahlschweißvorrichtung transportiert werden;

Fig. 18 eine teilweise Draufsicht auf eine weitere Ausführungsform.

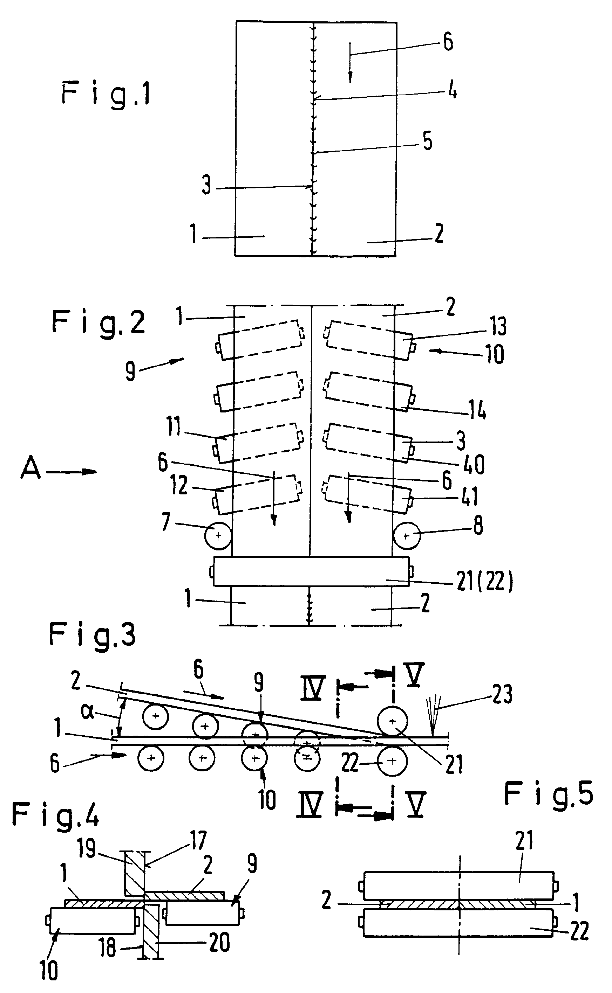

Figur 1 zeigt eine Draufsicht auf zwei Bleche oder Blechbänder 1 bzw. 2, die an ihren einander zugekehrten Längskanten 3, 4 stumpf gegeneinander stoßen und hier durch eine Längsschweißnaht 5 durch Laserstrahlschweißen miteinander verbunden sind.

Die Förderrichtung durch die im einzelnen noch zu beschreibende Einrichtung ist mit dem Pfeil 6 bezeichnet.

In Figur 2 ist die Zuführung der beiden Bleche 1 und 2 dargestellt. Die beiden Bleche oder Bänder 1 und 2 bewegen sich von der Seite her betrachtet, zum Beispiel bei Blickrichtung in Richtung des Pfeiles A in Figur 2, in einem spitzen Winkel $\alpha$ aufeinander zu, bis ihre Längskanten 3 und 4, die miteinander verschweißt werden sollen, aneinander stoßen. Das bedeutet, daß auch die noch zu beschreibenden Förderbahnen unter dem gleichen spitzen Winkel $\alpha$ zueinander verlaufen und sich durchdringen.

Nach dem Aneinanderstoßen der Längskanten 3 und 4 der Bleche bzw. Bänder 1 und 2 können diese durch seitliche Rollen 7 bzw. 8 an den Außenkanten geführt werden. Die Drehachsen der seitlichen Rollen 7 und 8 verlaufen orthogonal zum Aufstellboden der Einrichtung oder orthogonal zur Oberfläche der Bleche bzw. Bänder 1 und 2. Die seitlichen Rollen 7 und 8 haben die Tendenz, die Bleche 1 und 2 gegeneinander zu halten, so daß die Bleche 1, 2 fugendicht mit ihren einander zugekehrten Längskanten 3 und 4 zur Anlage gebracht werden können. Die Bleche 1 und 2 sollen sich nicht überlappen.

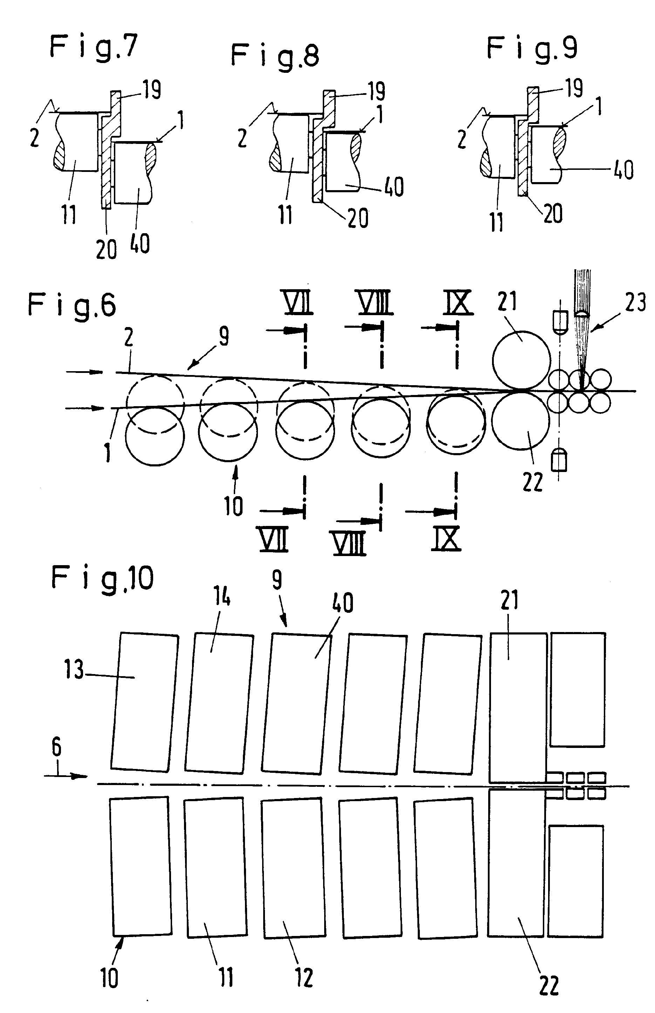

Wie insbesondere aus den Figuren 3, 6 und 18 hervorgeht, werden die Bleche oder Bänder 1 und 2 durch Rollenbahnen 9 bzw. 10 geführt. Die Rollen der Rollenbahnen 9 und 10 können allesamt oder nur einzeln motorisch angetrieben sein, um die Bleche in Förderrichtung 6 weiter zu bewegen.

Deutlich ist aus den Figuren 2, 3, 6, 10 und 18 zu erkennen, daß die Drehachsen der Rollenbahnen 9 und 10 jeweils in der gleichen Ebene liegen, die der betreffenden Rollenbahn 9 bzw. 10 zugeordnet ist. Jedoch sind die Drehachsen in Bezug auf die Förderrichtung 6 unter einem spitzen Winkel $\beta$ entgegengesetzt zur Förderrichtung 6 schräg angeordnet. Durch die schräg stehenden, angetriebenen Rollen 11, 12, 13, 14, werden die Bleche 1, 2 oder dergleichen mit ihren Längskanten 3 und 4 gegeneinander gedrückt, so daß im Bedarfsfalle auch auf die seitlichen Rollen 7, 8 verzichtet werden kann.

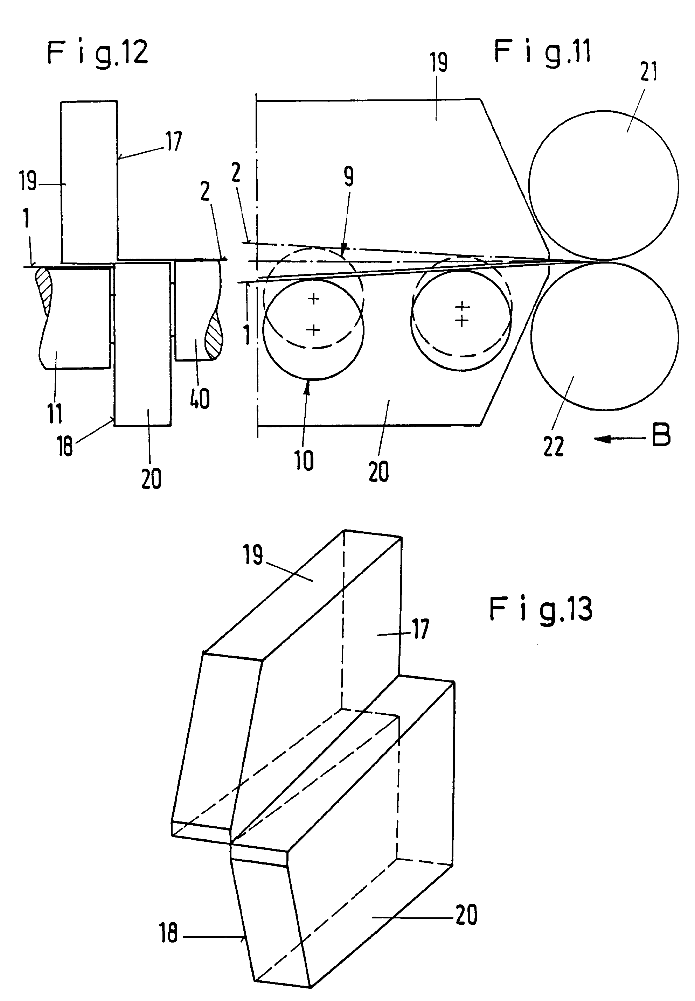

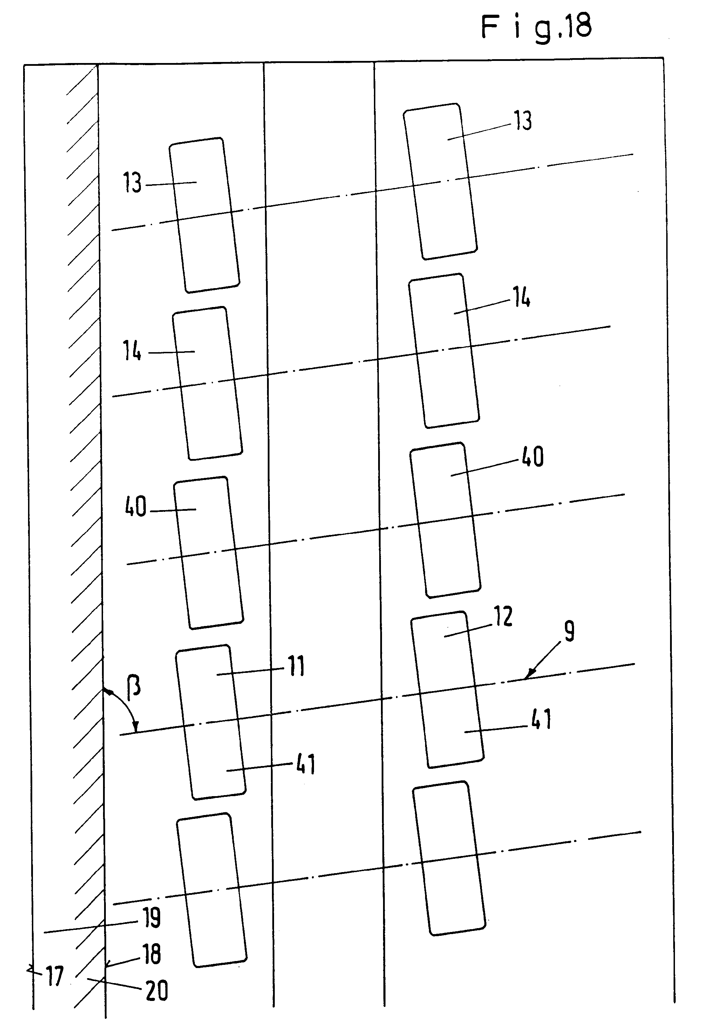

Die Rollen 11, 12, 13, 14, 40, 41 und folgende der Rollenbahnen 9, 10 können zylindrisch ausgebildet sein (Fig. 2) und sich jeweils etwa über die gesamte Breite der miteinander zu verschweißenden Bleche oder Bahnen 1, 2 erstrecken. Es ist jedoch auch möglich, die einzelnen Rollen wesentlich kürzer auszubilden, wie es in Figur 18 dargestellt ist. In Figur 18 sind lediglich einige der relativ kurzen Rollen mit Bezugszeichen 13, 14, 40, 41 auf einer Seite der Einrichtung mit Bezugszeichen versehen worden, während in Figur 2 lediglich die Rollen 11, 12 der anderen Rollenbahn 10 mit Bezugszeichen versehen worden sind. Die nicht bezeichneten entsprechenden Rollen sind jeweils gleichermaßen gestaltet. Jeweils zwei mit Abstand zueinander angeordnete Rollen, zum Beispiel die Rolle 13 in Figur 8 können eine gemeinsame Achse aufweisen oder koaxial zueinander angeordnet sein und gemeinsam motorisch angetrieben werden. Die miteinander zu verschweißenden Bleche oder Bahnen 1, 2 können durch Andrückrollen gegen die Rollen 11 bis 14, 40, 41 der Rollenbahn 9 und 10 von oben her angedrückt werden. Von diesen Andrückrollen wurden in Figur 11 lediglich zwei mit den Bezugszeichen 15 und 16 bezeichnet. Diese Andrückrollen 15 und 16 vergrößern den Kraftschluß zwischen den zu transportierenden Blechen 1 und 2 und den Rollen 11 und folgende der Rollenbahn 9 und 10 und stellen auch sicher, daß die Bleche 1 und 2 nach relativ kurzer Wegstrecke sich mit deren Längskanten 3 und 4 aufeinander zu bewegen. Dabei stoßen die Längskanten 3 und 4 gegen Führungsflächen 17 bzw. 18 zweier leistenförmiger Körper oder Lineale 19 bzw. 20, die in Längsrichtung der Längskanten 3 und 4 verlaufen und zwischen diesen so angeordnet sind, daß die Führungsflächen 17 und 18 orthogonal zu den Längskanten 3 und 4 verlaufen und in derselben, zwischen den beiden Blechen in der Ebene der Längskanten 3 und 4 angeordneten orthogonalen Ebene liegen. Dadurch werden die Bleche 1 und 2 an ihren Längskanten 3 und 4 bis unmittelbar zu einer Ebene geführt, in der sich die Ebenen der Rollenbahnen 9 und 10 durchdringen, da sich die Bleche 1 und 2 unter dem Winkel $\alpha$ aufeinander zu bewegen. Kurz nach der Stelle, an der sich die Ebenen der Rollenbahnen 9 und 10 schneiden, also auf gleicher Höhe zusammenkommen, gelangen die Längskanten 3 und 4 in Berührungskontakt, da sich an dieser Stelle auch kein Lineal 19 bzw. 20 mehr befindet. In diesem Bereich sind oberhalb und unterhalb der Bleche 1 und 2 Klemmrollen 21 und 22 vorgesehen, die die Bleche bzw. Bänder 1 und 2 in ihrer relativen Schweißlage zueinander halten.

In Vorschubrichtung 6 hinter den Klemmrollen 21 und 22 ist eine Laserstrahlschweißvorrichtung 23 vorgesehen. Hinter der Laserstrahlschweißvorrichtung 23 folgen in Figur 3 nicht dargestellte Einrichtungen für die allgemeine Nacharbeit, wie Schweißnahtputzvorrichtungen und Einrichtungen zur Schweißnahtkontrolle sowie der Abfuhrrollgang.

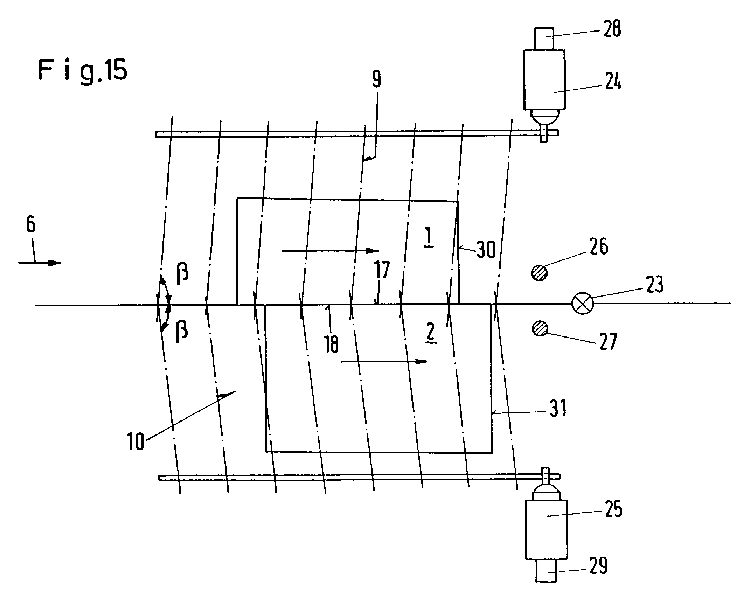

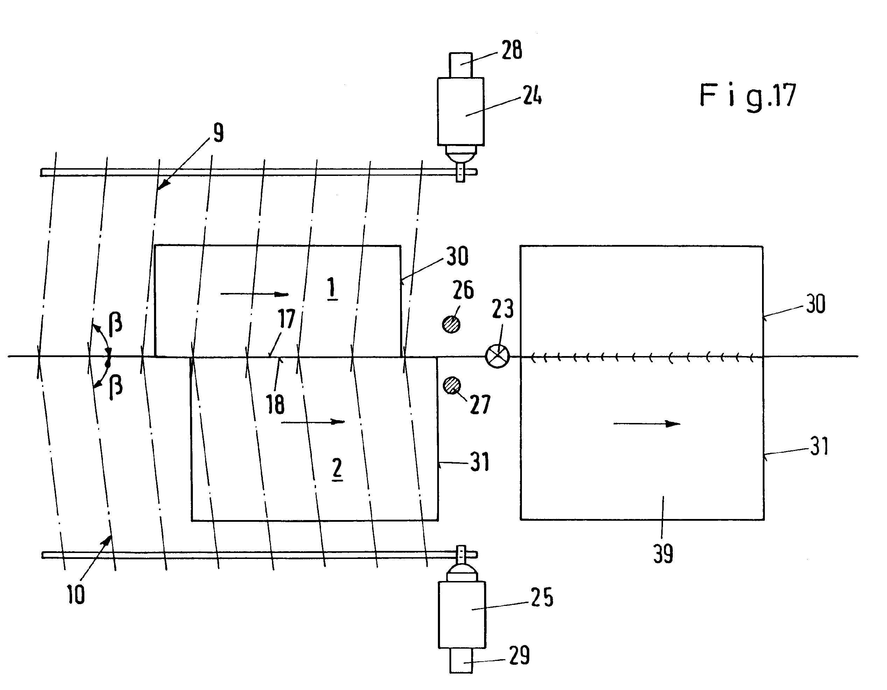

Wie aus Figur 15 ersichtlich ist, werden zwei miteinander zu verschweißende Bleche 1 und 2 auf die Rollgänge 9 und 10 aufgebracht, wobei zunächst nicht darauf geachtet wird, wie diese Bleche 1 und 2 in Bezug auf ihre Längszuordnung auf die Rollenbahn 9 und 10 zu liegen kommen. In Figur 12 ist deshalb dargestellt, daß die Bleche 1 und 2 in Längsrichtung um ein gewisses Maß gegeneinander versetzt sind. Wie bereits beschrieben wurde, werden die Bleche 1 und 2 durch die Schrägstellung der Rollenbahnachsen 9 unter dem Winkel β schon nach relativ kurzem Förderweg gegen die Lineale 19 und 20 bewegt, so daß sie satt an den Linealen 19 und 20 zur Anlage kommen, die allerdings in den Figuren 15 bis 17 nicht besonders dargestellt sind.

Die Rollenbahnen 9 und 10 besitzen eigene, getrennt funktionierende Motoren 24 bzw. 25, eigene Sensoren 26 bzw. 27 und eigene Inkrementalgeber 28 bzw. 29.

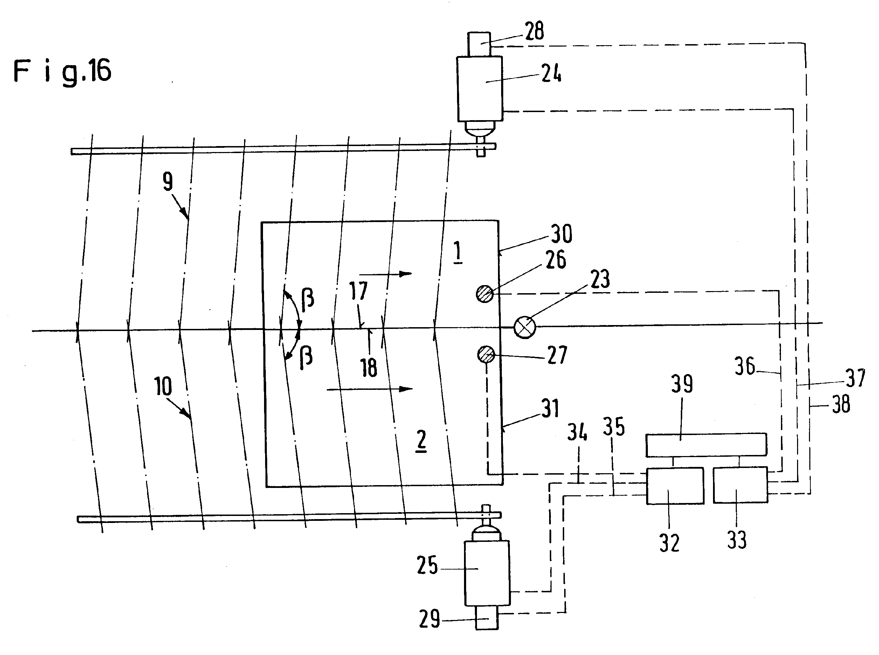

Sobald ein Blech 1 bzw. 2 beim Transport in Pfeilrichtung 6 den jeweiligen Sensor 26 bzw. 27 erreicht hat, gibt dieser Sensor 26 bzw. 27 ein Signal an den zugeordneten Inkrementalgeber 28 bzw. 29. Dieser Inkrementalgeber 28 bzw. 29 arbeitet nun eine vorgegebene Anzahl Inkremente ab und gibt dem zugeordneten Motor 24 bzw. 25 vor, in einer definierten Position anzuhalten. Dieser Zustand ist in Figur 16 veranschaulicht worden. Deutlich erkennt man aus Figur 16, daß die vorderen Stirnkanten 30 und 31 der Bleche 1 und 2 in gleicher Ebene liegen, die bei der dargestellten Ansführungsform orthogonal zu der durch die einander zugekehrten Führungsflächen 17 und 18 verlaufenden Vertikalebene verläuft.

Anschließend werden die so längs ausgerichteten Bleche 1 und 2 durch synchronen Betrieb der Motoren 24 und 25 durch die stehende Laserstrahlschweißvorrichtung 23 transportiert, wobei die Bleche 1, 2 an ihren einander angrenzenden Längskanten 3 und 4 zur Erzeugung der Längsschweißnaht 5 miteinander verschweißt werden.

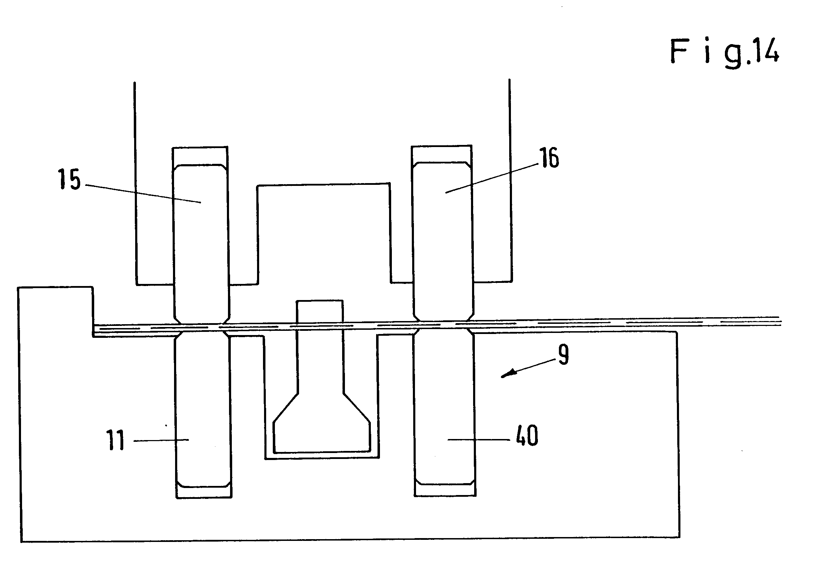

Der Synchronlauf der Motoren 24 und 25 wird entweder durch eine mechanische Kupplung zwischen diesen Motoren 24 und 25 erreicht, die nach der erfolgten Längenzentrierung (Figur 16) eingeschaltet wird, oder aber durch eine elektrische Welle, das heißt durch elektrische Steuerungen der Motoren 24 und 25. Diese Steuerungsmittel sind in Figur 13 mit den Bezugszeichen 32, 33, 34, 35, 36, 37 und 38 bezeichnet. Dabei wird durch geeignete Steuerungskomponenten der Gleichlauf herbeigeführt und überwacht. Bei diesen Steuerungsmitteln 32 bis 38 kann es sich um handelsübliche Steuerungskomponenten handeln, die im Rahmen des Erfindungsgedankens (Aufgabe und Lösung) lediglich in erfindungsgemäßer Weise angewendet und eingesetzt werden.

Unmittelbar nach dem Durchlauf und Verschweißen der Bleche 1 und 2 zu der aus Fig. 14 ersichtlichen Blechplatine 39 werden wiederum zwei miteinander zu verschweißende Bleche 1 und 2 den Rollenbahnen 9 und 10 zugefördert, woraufhin sich der Arbeitszyklus wiederholt. Somit ist ein ständiger kontinuierlicher Betrieb der Einrichtung gewährleistet.

Statt getrennter Bleche 1 und 2 können auch Blechbahnen größerer Längenabmessungen von nicht dargestellten Wicken (Coil) zur Anwendung gelangen.

# Bezugszeichenliste

| | |
|---|---|
| 1 | Blech, Blechband |
| 2 | "         " |
| 3 | Längskante |
| 4 | " |
| 5 | Längsschweißnaht |
| 6 | Pfeil, Förderrichtung |
| 7 | Rolle, seitliche |
| 8 | " |
| 9 | Rollenbahn |
| 10 | " |
| 11 | Rolle |
| 12 | " |
| 13 | " |
| 14 | " |
| 15 | Andrückrolle |
| 16 | " |
| 17 | Führungsfläche |
| 18 | " |
| 19 | leistenförmiger Körper, Lineal |
| 20 | " |

21    Klemmrolle

22    "

23    Laserstrahlschweißvorrichtung, Laserfocussierung

24    Motor

25    "

26    Sensor

27    "

28    Inkrementalgeber

29    "

30    Stirnkante, vordere

31    "

32    Steuerungsmittel

33    "

34    "

35    "

36    "

37    "

38    "

39    Blechplatine

40    Rolle

41    "

$\alpha$    Neigungswinkel der Förderbahnen 9 und 10 zueinander

$\beta$    Anstellwinkel der Drehachsen der Rollen 11 und 12 der Förderbahnen 9 und 10

A    Ansichtsrichtung in Figur 2

EP 0 438 612 B1

**Patentansprüche**

1. Verfahren zum stumpfen oder überlapptem Verschweißen von Blechen oder Bändern (1,2), im kontinuierlichen Durchlaufverfahren, wobei die Bleche oder Bänder (1,2) seitlich nebeneinander mit jeweils einer ihrer Längskanten (3,4) an in derselben Vertikalebene liegenden Führungsflächen (17,18) liegend, auf in spitzem Winkel (α) zueinander geneigt liegenden Förderebenen zweier Rollenbahnen (9,10) zum fugenlosen oder überlapptem Anliegen bzw. Aufliegen in derselben Horizontalebene gebracht und anschließend durch ein Laserstrahlschweißverfahren miteinander verschweißt werden, **dadurch gekennzeichnet, daß**

   a) die miteinander zu verschweißenden Bleche oder Bänder (1, 2) gleicher oder unterschiedlicher Dicke - gegebenenfalls einseitig oder beidseitig beschichtet - und/oder reflektierend, von gleicher oder unterschiedlicher Geometrie auf den beiden Rollenbahnen (9, 10) ohne Längsausrichtung aufgelegt und in Richtung auf die Laserstrahlschweißvorrichtung (23) weiterbefördert und dabei mit ihren miteinander zu verschweißenden Längskanten (3, 4) parallel zueinander ausgerichtet werden;

   b) daß die beiden Rollenbahnen (9, 10) durch getrennte Motoren (24 bzw. 25) angetrieben werden, denen jeweils mindestens ein Inkrementalgeber (28 bzw. 29) zugeordnet ist;

   c) daß im Förderbereich der miteinander zu verschweißenden Bleche (1, 2) Sensoren (26, 27) angeordnet sind, die ein Signal an den jeweiligen Inkrementalgeber (28 bzw. 29) geben, sobald die in Förderrichtung (6) vorderen Kanten (30, 31) der Bleche (1, 2) den betreffenden Sensor (26, 27) erreicht haben, woraufhin der betreffende Inkrementalgeber (28 bzw. 29) eine vorgegebene, gegebenenfalls einstellbare Anzahl Inkremente abarbeitet und den zugeordneten Motor (28 bzw. 29) in einer definierten Position abschaltet, derart, daß die Vorderkanten (30, 31) der miteinander zu verschweißenden Bleche (1, 2) in derselben Ebene genau fluchtend oder mit in Durchlaufrichtung mit vorbestimmten Versatz zueinander angeordnet sind;

   d) woraufhin die Motoren synchron die beiden Rollenbahnen (9, 10) zwecks synchroner Förderung der Bleche (1, 2) der Laserstrahlschweißvorrichtung (23) zufördern, wo die Bleche zu einer Blechplatine (39) miteinander verschweißt werden.

2. Einrichtung zur Durchführung des Verfahrens nach Anspruch 1, bei welcher die stumpf oder überlappt miteinander zu verschweißenden Bleche oder Bänder (1,2) herangefördert werden, und die Ebenen der Förderer in spitzem Winkel (α) zueinander liegende Förderebenen bilden, auf denen die Bleche oder Bänder (1,2) ruhen, wobei zwischen den Förderebenen orthogonal - vertikal - zu diesen verlaufend wenigstens ein leistenförmiger Anschlag (Lineal) (19,20) angeordnet ist, gegen den die Bleche (1,2) mit ihren miteinander zu verschweißenden Kanten (3,4) flächig entlangrutschen, und der leistenförmige Anschlag (19,20) od. dgl. bis kurz vor der Laserstrahlschweißvorrichtung (23) reicht, mit Mitteln zur Längenzentrierung der Bleche oder Bänder (1,2), **dadurch gekennzeichnet, daß**

   a) den beiden Rollenbahnen (9 bzw. 10) getrennte Motoren (24 bzw. 25) zugeordnet sind;

   b) jedem Motor (24 bzw. 25) ein Inkrementalgeber (28 bzw. 29) zugeordnet ist;

   c) den Rollenbahnen (9, 10) in Förderrichtung vor der Laserstrahlschweißvorrichtung (23) Sensoren (26, 27) zugeordnet sind, die ein Signal an den jeweiligen Inkrementalgeber (28 bzw. 29) geben sobald die in Förderrichtung (6) vorderen Kanten (30, 31) der Bleche (1,2) den betreffenden Sensor (26,27) erreicht haben;

   d) Steuerungsmittel (32, 33, 34, 35, 36, 37, 38) vorgesehen sind, über welche die Sensoren (26, 27) mit den Inkrementalgebern (28, 29) bzw. den Motoren (24, 25) in elektrischer und/oder elektronischer Verbindung stehen, um die Motoren (24, 25) zwecks Längszentrierung der miteinander zu verschweißenden Bleche (1, 2) abwechselnd ein- bzw. auszuschalten und sie auch wieder synchron zwecks Synchronlauf der Bleche (1, 2) zur Laserstrahlschweißvorrichtung (23) zu betreiben;

   e) der Synchronlauf der Motoren (24, 25) erreicht wird durch eine mechanische Kupplung zwischen diesen Motoren (24, 25) die nach der erfolgten Längenzentrierung der miteinander zu verschweißenden Bleche (1, 2) zugeschaltet wird, oder

   f) durch eine elektrische Welle, das heißt durch eine elektrische Steuerung (32, 33, 34, 35, 36, 37, 38) der Motoren (24, 25).

**Claims**

1. Process for butt or lap welding of metal sheets or bands (1, 2) in continuous run-through process, whereby said sheets or bands (1, 2) lying side-by-side to each other with each of their longitudinal edges (3, 4) at

8

guiding surfaces (17, 18) situated in the same vertical plane are brought onto conveyor planes of two roller paths (9, 10) lying inclined to each other in an acute angle ($\alpha$) for jointless or lap close fitting and resting upon the same horizontal plane respectively, and, subsequently, are welded to each other by a laser beam welding method, characterized in that

a) said metal sheets or bands (1, 2) of equal or different thickness, which are to be welded together, and, if occasion should arise, will be coated one-sided or on both sides, and/or reflecting, of equal or different geometry, will be laid onto said two roller paths (9, 10) without longitudinal alignment and will be further conveyed towards said laser beam welding device and, thereby, will be parallel aligned to each other with their longitudinal edges (3, 4) to be welded with each other;

b) said two roller paths (9, 10) will be driven by separated motors (24 resp. 25) to which are allocated each at least one incremental emitter (28 resp. 29);

c) in said conveyor region of the metal sheets (1, 2) to be welded with each other, sensors (26, 27) are arranged for giving a signal to said incremental emitter (28 resp. 29) concerned, as soon as the front edges (30, 31) of said metal sheets (1, 2), provided in conveyor direction (6), have reached said sensor (26, 27) concerned, whereupon said incremental emitter (28 resp. 29) concerned will run a given, if need be, adjustable number of increments and will switch off said motor (24 resp. 25) allocated in a defined position in such a way that said front edges (30, 31) of said metal sheets (1, 2) to be welded with each other are arranged in the same plane in true alignment or together in run-through direction with predetermined displacement;

d) where-upon said motors will feed synchronously said two roller paths (9, 10) for the purpose of synchronous conveying of said metal sheets (1, 2) to said laser beam welding device (23), where said metal sheets (1, 2) are welded with each other to a metal sheet flat bar (39).

2. Arrangement for carrying out said process according to claim 1, by which said metal sheets or bands (1, 2) that are to be butt or lap welded with each other, will be advanced, and the planes of said conveyors form conveyor planes lying in an acute angle ($\alpha$) to each other, on which the metal sheets or bands (1, 2) are resting, whereby at least one ledge-like stop (ruler) (19, 20) is arranged between said conveyor planes, running orthogonal or vertical to these, and said metal sheets (1, 2) glide along in two-dimensional manner with their edges (3, 4) to be welded with each other against said stop (19, 20), and said stop (19, 20) or similar means extend shortly up to the front of said laser beam welding device (23) with means for centering the length of said metal sheets or bands (1, 2), characterized in that

a) separate motors (24 resp. 25( are allocated to both said roller paths (9 resp. 10);

b) an incremental emitter (28 resp. 29) is allocated to each motor (24 resp. 25);

c) sensors (26, 27) are allocated to said roller paths (9, 10) in feed direction before said laser beam welding device (23), whereby said sensors (26, 27) will give a signal to said incremental emitter (28 reps. 29) concerned, as soon as said front edges (30, 31) of said metal sheets (1, 2), provided in conveyor direction, have reached said sensor (26, 27) concerned;

d) control means (32, 33, 34, 35, 36, 37, 38) are provided, via which said sensors (26, 27) are in electric and/or electronic connection with said incremental emitters (28, 29) and with said motors (24, 25) respectively, in order to alternately switch on and off respectively said motors (24, 25) for the purpose of centering length of metal sheets (1, 2) to be welded with each other and also again operate said motors (24, 25)synchronously for the purpose of synchronous running said metal sheets (1, 2) to said laser beam welding device (23);

e) said synchronous running of said motors (24, 25) will be reached by a mechanical clutch arranged between these motors (24, 25), which will be connected, after centering length of said metal sheets (1, 2) to be welded with each other has been carried out or

f) by an electric shaft, that means by an electric control (32, 33, 34, 35, 36, 37, 28) of said motors (24, 25).

## Revendications

1. Procédé pour souder, bout à bout ou avec recouvrement, des tôles ou des bandes dans le procédé à défilement continu, les tôles ou les bandes (1,2) se trouvant à plat l'une à côté de l'autre, l'une de leurs bordures longitudinales (3,4) respectives appliquant contre les surfaces de guidage (17,18) situées sur le même plan vertical, ces tôles ou bandes (1,2) étant convoyées sur les plans inclinés de deux transrouleurs à rouleaux formant un angle aigu ($\alpha$) l'un par rapport à l'autre pour venir appliquer bout à bout ou se recouvrir sur le même plan horizontal et pour être ensuite soudées les unes aux autres par un procédé de soudage au rayon laser, **caractérisé en ce que**

a) Les tôles ou bandes à souder les unes aux autres (1,2), d'épaisseurs identiques ou différentes - le cas échéant à revêtement mono ou bilatéral - et/ou réfléchissantes, de géométries identiques ou différentes, sont déposées sans alignement longitudinal sur deux transrouleurs à rouleaux (9,10) puis continuent d'être convoyées en direction du dispositif de soudage au rayon laser (23), leurs bordures longitudinales (3,4) à souder l'une à l'autre étant alignées parallèles l'une à l'autre pendant l'approche jusqu'audit dispositif (23);

b) Les deux transrouleurs à rouleaux (9,10) sont entraînés par des moteurs séparés (24 et 25) à chacun desquels est affecté au moins un générateur incrémentiel (28 et 29);

c) Des capteurs (26,27) sont disposés dans la zone de convoyage des tôles (1,2) à souder ensemble et transmettent un signal au générateur incrémentiel respectif (28 et 29) dès que les bordures avant (30,31) des tôles (12) dans le sens (6) du convoyage ont atteint le capteur (26,27) concerné, le générateur incrémentiel concerné (28 et 29) traitant un nombre le cas échéant réglable d'incréments et coupant le moteur qui lui est subordonné (28 et 29) dans une position définie telle que les bordures avant (30,31) des tôles à souder (1,2) soient exactement dans l'alignement l'une de l'autre ou soient disposées, dans le sens du défilement, avec un décalage prédéterminé l'une par rapport à l'autre.

d) Ensuite les moteurs entraînent en synchronisme les deux transrouleurs à rouleaux (9,10) afin de convoyer les tôles (1,2) en synchronisme vers le dispositif de soudage au rayon laser (23) où les tôles sont soudées ensemble pour former une platine de tôle (39).

2.  Dispositif d'exécution du procédé selon revendication 1 dans lequel les tôles ou bandes (1,2) à souder bout à bout ou avec recouvrement sont approchées par convoyage, et les plans des convoyeurs forment des plans de convoyage en angle aigu ($\alpha$) l'un par rapport à l'autre sur lesquels reposent les tôles ou bandes (1,2), au moins une butée (règle) (19,20) en forme de listel étant disposée entre les plans de convoyage et ayant un tracé orthogonal - vertical - par rapport à ceux-ci, les tôles (1,2) glissant par la surface de leurs bordures à souder (3,4) le long de cette butée (1,2) et la butée ou assimilée (19,20) en forme de listel se terminant peu avant le dispositif de soudage au rayon laser (23), avec des moyens de centrage longitudinal des tôles ou bandes (1,2), **caractérisé en ce que**

a) Aux deux transrouleurs (9 et 10) sont affectés des moteurs séparés (24 et 25);

b) A chaque moteur (24 et 25) est affecté un générateur incrémentiel (28 et 29);

c) Des capteurs (26, 27) sont affectés aux transrouleurs à rouleaux (9,10) dans le sens du convoyage en amont du dispositif de soudage au rayon laser (23), ces capteurs (26,27) envoyant un signal au générateur incrémentiel respectif (28 et 29) dès que les bordures avant (30,31) des tôles ont atteint, dans le sens du convoyage, le capteur concerné (26,27).

d) Des moyens de commande (32, 33, 34, 35, 36, 37, 38) sont prévus par le biais desquels les capteurs (26,27) sont reliés électriquement et/ou électroniquement aux générateurs incrémentiels (28,29) et aux moteurs (24, 25) pour, en alternance, enclencher et couper les moteurs (24,25) afin de centrer longitudinalement les tôles (1,2) à souder ensemble et pour les (24,25) faire fonctionner à nouveau en synchronisme pour que les tôles (1,2) avancent en synchronisme jusqu'au dispositif de soudage au rayon laser (23).

e) La marche synchrone des moteurs (24,25) est réalisée par un accouplement mécanique entre ces moteurs (24, 25) qui s'enclenche une fois centrées longitudinalement les tôles (1,2) à souder ensemble, ou

f) Par un arbre électrique, c'est-à-dire par une commande électrique (32, 33, 34, 35, 36, 37, 38) des moteurs (24,25).

EP 0 438 612 B1

Fig.1

Fig.2

Fig.3

Fig.4

Fig.5

11

Fig.7

Fig.8

Fig.9

Fig.6

Fig.10

Fig.12

Fig.11

Fig.13

13

EP 0 438 612 B1

Fig.14

F i g.15

EP 0 438 612 B1

Fig.16

Fig.17

F i g . 18